Europäisches Patentamt

European Patent Office

Office européen des brevets

(19)

(11) Veröffentlichungsnummer: **0 321 661 B1**

# (12) EUROPÄISCHE PATENTSCHRIFT

(45) Veröffentlichungstag der Patentschrift:
14.08.91 Patentblatt 91/33

(51) Int. Cl.⁵: **F16D 66/02**

(21) Anmeldenummer: 88116078.2

(22) Anmeldetag: 29.09.88

(54) Vorrichtung zur Überwachung eines einem Verschleiss unterworfenen Bauteils.

(30) Priorität: 19.12.87 DE 3743254

(43) Veröffentlichungstag der Anmeldung:
28.06.89 Patentblatt 89/26

(45) Bekanntmachung des Hinweises auf die
Patenterteilung:
14.08.91 Patentblatt 91/33

(84) Benannte Vertragsstaaten:
DE FR GB IT

(56) Entgegenhaltungen:
EP-A- 0 077 206
EP-A- 0 140 241
EP-A- 0 206 487
DE-A- 2 030 967
DE-A- 2 257 250
FR-A- 2 450 979
FR-A- 2 504 226

(56) Entgegenhaltungen:
RESEARCH DISCLOSURE, Nr. 203, März 1981,
disclosure no. 20327, Seite 124, Havant
Hampshire, GB; "Vehicle brake lining wear
sensor"

(73) Patentinhaber: Kabelmetal Electro GmbH
Kabelkamp 20
W-3000 Hannover 1 (DE)
Patentinhaber: THYSSEN INDUSTRIE AG
Am Thyssenhaus 1
W-4300 Essen 1 (DE)

(72) Erfinder: Fischer, Werner, Dipl.-Ing.
Melanchthonweg 5
W-8015 Markt Schwaben (DE)
Erfinder: Schauer, Friedrich, Dipl.-Ing.
Forstweg 10
W-8501 Heroldsberg (DE)
Erfinder: Kramer, Kurt, Dipl.-Ing.
Äussere Bayreuther Strasse 152
W-8500 Nürnberg (DE)

## Beschreibung

Die Erfindung bezieht sich auf eine Vorrichtung zur Überwachung eines einem Verschleiß unterworfenen Bauteils, bei welcher in einer Ausnehmung des Bauteils ein Sensor angebracht ist, dessen in die Ausnehmung hineinragende Länge einer vorgegebenen Mindestwandstärke des Bauteils entspricht und der mindestens eine hitzebeständige elektrische Leitung aufweist, die in Form einer im Sensor liegenden Schleife geführt ist und deren aus dem Sensor herausragende Enden mit elektrischen Kontakten für ihre Leiter verbunden sind (FR-A-2504226).

Eine solche Vorrichtung kann beispielsweise bei der Überwachung der Funktionsfähigkeit von Bremsbelägen bzw. Bremsklötzen von Kraftfahrzeugen und Eisenbahnen eingesetzt werden. Von besonderer Bedeutung ist eine solche Vorrichtung für die Verschleißüberwachung bei den Kufen einer Magnetschwebebahn. Sie kann jedoch grundsätzlich überall dort angewendet werden, wo eine für die Funktion noch brauchbare Mindestwandstärke eines einem Verschleiß unterliegenden Bauteils überwacht und das Erreichen derselben automatisch angezeigt werden soll. In den weiteren Ausführungen wird — stellvertretend für alle möglichen Anwendungsfälle — auf die Überwachung der Kufen einer Magnetschwebebahn eingegangen.

Insbesondere bei Magnetschwebebahnen ist für die Kufen eine Mindestwandstärke erforderlich, damit sie im Notfall zum Gleiten eines Zuges noch wirksam sind, der auf einem Magnetfeld schwebt und daher keine Berührung mit dem Fahrweg hat. Problematisch für eine automatische Überwachung der Kufen ist, daß bei einem Gleitvorgang durch die damit verbundene Reibung zwischen Fahrweg und Kufen eine erhebliche Erwärmung der Kufen auftritt. Es können dabei in den Kufen ohne weiteres Temperaturen von über 700°C entstehen. Die Kufen selbst halten solche Temperaturen ohne Beschädigungsgefahr aus. Ein wie auch immer aufgebauter Sensor, mit dem der Verschleiß der Kufen überwacht werden soll, muß diese Temperaturen aber auch aushalten, und zwar mehrfach, nämlich bei jedem Gleitvorgang, damit er noch funktionsfähig ist, wenn die Mindestwandstärke der Kufen erreicht ist.

Bei der bekannten Vorrichtung nach der eingangs erwähnten FR-OS 2504226 besteht die Leitung aus einem von Isoliermaterial umgebenen Leiter. Der isolierte Leiter ist in einem aus Isoliermaterial bestehenden Körper eingebettet, der über das schleifenförmig gebogene Ende des Leiters hinausragt und daher zunächst abgetragen werden muß, bevor der den Verschleiß überwachende Leiter wirksam werden kann. Der Sensor dieser Vorrichtung spricht außerdem erst dann an, wenn der Leiter vollständig durchtrennt ist. Dadurch ist diese Vorrichtung nicht universell einsetzbar. Sie kann für Bremsbeläge aus Metall nicht verwendet werden, da das abgeriebene Metall solcher Bremsbeläge den Weg zwischen den Leiterenden an der Trennstelle elektrisch leitend überbrücken könnte. Der Sensor dieser Vorrichtung wäre dann überhaupt nicht wirksam, selbst wenn der Leiter unterbrochen wäre.

Der Erfindung liegt die Aufgabe zugrunde, die eingangs geschilderte Vorrichtung so weiterzubilden, daß sie unter Beibehaltung ihrer auch bei hohen Temperaturen gegebenen Funktionsfähigkeit universell zur Überwachung des Verschleißes von Bauteilen aus beliebigem Material einsetzbar ist.

Diese Aufgabe wird dadurch gelöst,
— daß die Leitung als koaxiale Leitung ausgebildet ist, die aus einem Innenleiter einer denselben umgebenden, hitzebeständigen Isolierung und einem über der Isolierung liegenden, als geschlossenes Rohr ausgeführten Außenleiter besteht und
— daß die Leitung im Sensor etwa halbkreisförmig gebogen so in demselben angeordnet ist, daß ihr Außenleiter etwa in Höhe der in der Ausnehmung des Bauteils befindlichen Endfläche des Sensors liegt.

Die für den Sensor verwendete koaxiale Leitung hat eine hitzebeständige Isolierung, so daß der Sensor insgesamt sehr hohe Temperaturen unbeschadet übersteht. Die Isolierung ist außerdem von dem als geschlossenes Rohr ausgeführten Außenleiter umgeben und damit gasdicht eingekapselt. Es findet daher auch bei Temperaturen von über 700°C keine Oxidation statt, so daß die Isolierung im wesentlichen unverändert erhalten bleibt. Selbst dann aber, wenn das Material der Isolierung bei so hohen Temperaturen zu Pulverasche zersetzt wird, kommt es nicht zum Kurzschluß, da der Außenleiter die Pulverasche fest umschließt und dadurch eine Verlagerung des Innenleiters verhindert. Die Leitung und damit der Sensor behalten auch in diesem Fall ihre Funktionsfähigkeit. Durch den Außenleiter ist die Leitung außerdem gut gegen Feuchtigkeit geschützt, so daß die Funktionsfähigkeit des Sensors auch nicht durch Witterungseinflüsse beeinträchtigt werden kann. Der so aufgebaute Sensor erlaubt eine schnelle und wirksame Anzeige des Erreichens der Mindestwandstärke. Beim Erreichen derselben wird zunächst nur der Außenleiter abgetragen, was zu einer in einem an die Leitung angeschlossenen Meßgerät registrierbaren Kapazitätsänderung führt. Hierdurch kann bereits eine Art Voralarm ausgelöst werden. Voll wirksam wird der Sensor nach Durchtrennung der Isolierung und damit verbundenem Kurzschluß zwischen den beiden Leitern der Leitung und bei einer Leiterunterbrechung.

Da mit fortschreitendem Verschleiß des Bauteils zunächst nur der Außenleiter der im Sensor eingesetzten Leitung abgetragen bzw. beschädigt wird, ist derselbe unabhängig vom Material des Bauteils. Die Kapazitätsänderung der Leitung tritt nämlich auch dann ein, wenn das Bauteil aus Metall, wie beispielsweise Titan, besteht, was bei den Kufen von Magnetschwebebahnen der Fall ist. Die Vorrichtung wird dadurch auch sehr sicher, da das Bauteil nach dem Voralarm noch voll wirksam ist. Wenn das Bauteil nach dem Voralarm nicht sofort ausgetauscht, sondern bei weiteren Verschleißvorgängen weiter abgetragen wird, dann führen der folgende Kurzschluß zwischen Außen- und Innenleiter sowie die Durchtrennung des Innenleiters der koaxialen Leitung zu einer weiteren, endgültigen Anzeige des jetzt kritischen Verschleißes am zu überwachenden Bauteil.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen :

Fig. 1 in schematischer Darstellung ein Bauteil mit einem den Verschleiß überwachenden Sensor.

Fig. 2 einen Sensor im Schnitt in vergrößerter Darstellung.

Fig. 3 einen gegenüber Fig. 2 abgewandelten Sensor.

Fig. 4 einen Schnitt durch Fig. 3 längs der Linie IV-IV.

Fig. 5 in schematischer Darstellung eine für den Sensor verwendbare Leitung.

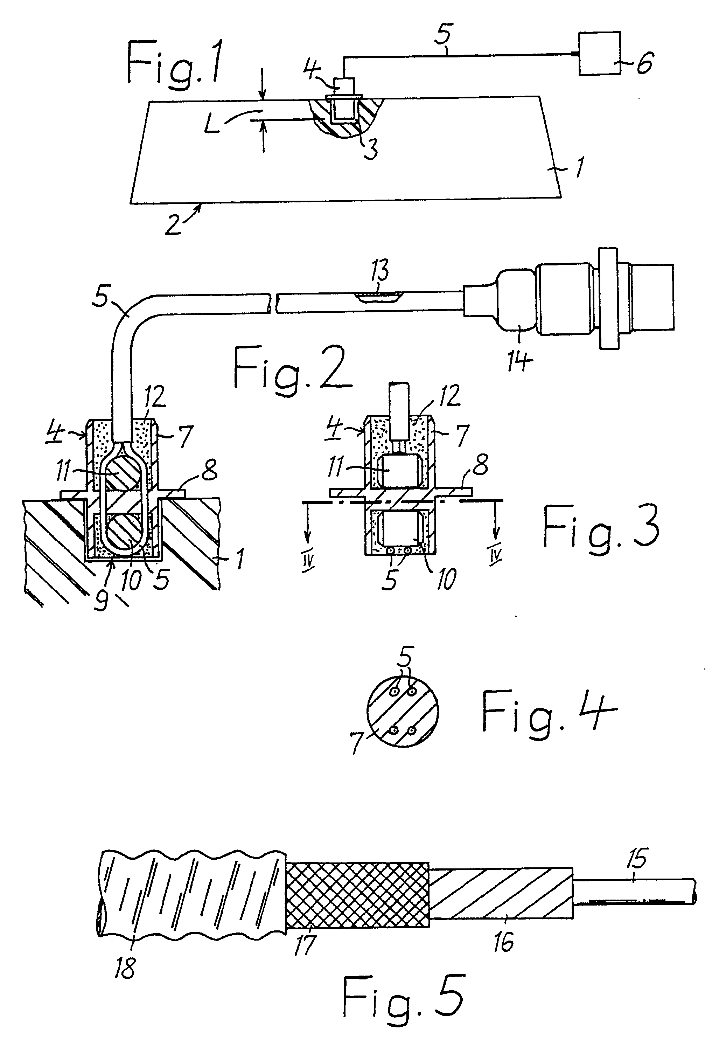

In Fig. 1 ist ein Bauteil 1 dargestellt, das als Verschleißteil dient. Bei diesem Bauteil kann es sich beispielsweise um einen Gleitbelag bzw. Bremsklotz für beliebige Fahrzeuge handeln. Das Bauteil 1 wird im folgenden als "Kufe 1" bezeichnet.

Die Kufe 1 ist in einem Fahrzeug so angeordnet, daß für den Fall eines Gleit- bzw. Bremsvorgangs die Fläche 2 als Reibfläche dient und dementsprechend je nach Geschwindigkeit und Reibwert mehr oder weniger stark abgetragen wird. Auf der der Fläche 2 gegenüberliegenden Seite ist in der Kufe 1 eine Ausnehmung 3 angebracht, in welche ein mit elektrischem Strom arbeitender Sensor 4 eingesetzt ist. Der Sensor 4 ist über eine Leitung 5 mit einem Gerät 6 verbunden, in dem vom Sensor 4 kommende Signale erfaßt und ausgewertet werden können. Er kann gemäß Fig. 2 ein mechanisch stabiles und temperaturbeständiges Gehäuse 7 aufweisen, an dem ein zur Anlage an der Kufe 1 bestimmter Flansch 8 angebracht ist. Die Länge L des Gehäuses 7 vom Flansch 8 bis zur Endfläche 9 entspricht der Mindestwandstärke der Kufe 1, welche dieselbe haben muß, um noch funktionsfähig zu sein.

Im Sensor 4 ist mindestens eine als koaxiale Leitung ausgeführte elektrische Leitung 5 angeordnet, deren genauerer Aufbau weiter unten an Hand von Fig. 5 erläutert wird. Die Leitung 5 ist im Gehäuse 7 des Sensors 4 schleifenförmig geformt und am Ende der Schleife etwa halbkreisförmig gebogen. Sie ist dabei so angeordnet, daß sie zumindest punkt- oder linienförmig bis in den Bereich der Endfläche 9 des Sensors 4 ragt. Die Endfläche 9 verläuft im dargestellten Ausführungsbeispiel als ebene Fläche etwa tangential zur Leitung 5. Zu ihrer mechanischen Stabilisierung kann die Leitung 5 an dem in die Ausnehmung 3 hineinragenden Ende des Sensors 4 um einen zylindrischen Stützkörper 10 herumgeformt sein, an dem sie anliegt. Auf der anderen Seite des Gehäuses 7 kann ein zweiter zylindrischer Stützkörper 11 angeordnet sein.

Alle Hohlräume innerhalb des Gehäuses 7 des Sensors 4 können mit einer Vergußmasse 12 ausgefüllt sein, so daß Feuchtigkeit nicht in das Gehäuse 7 eindringen kann. Aus Temperaturgründen wird vorzugsweise eine Vergußmasse 12 auf keramischer Basis verwendet.

Die aus dem Gehäuse 7 herausragenden Enden der Leitung 5 sind von einem aus Kunststoff bestehenden Schutzmantel 13 umgeben. Sie sind nebeneinander verlaufend bis zu einem Kupplungsteil 14 geführt, in dem elektrische Kontakte für die Leiter der Leitung 5 angebracht sind. Die Leitung 5 ist feuchtigkeitsdicht mit dem Kupplungsteil 14 verbunden, was beispielsweise durch Anspritzen realisiert sein kann. Der Schutzmantel 13 ist bis in die Vergußmasse 12 und bis in das Kupplungsteil 14 hineingeführt.

In bevorzugter Ausführungsform sind in dem Gehäuse 7 entsprechend Fig. 3 zwei Leitungen 5 nebeneinander angeordnet, die in identischer Weise geformt und mit dem Kupplungsteil 14 verbunden sind. Der Einsatz von zwei Leitungen 5 erfolgt aus Redundanzgründen, damit der Sensor 4 auf jeden Fall wirksam bleibt, auch wenn aus irgendwelchen Gründen eines der beiden dadurch gebildeten Überwachungssysteme ausfallen sollte. Sie werden entsprechend dem Schnittbild in Fig. 4 parallel zueinander geführt. Ihre aus dem Sensor 4 herausragenden Enden können in einem gemeinsamen Schutzmantel 13 eingebettet sein.

Die Leitung 5 hat in bevorzugter Ausführungsform einen Innenleiter 15 aus vernickeltem Kupfer. Es kann sich um einen massiven oder rohrförmigen Leiter, aber auch um einen flexiblen Litzenleiter handeln. Um den Innenleiter 15 ist ein Glimmerband 16 überlappend herumgewickelt, und zwar in mindestens einer Lage. Über dem Glimmerband 16 ist ein Geflecht 17 aus Glasseidefäden aufgebracht, das das Glimmerband 16 fest umschließt. Damit ist für den selbst hitzebeständigen Innenleiter 15 eine auch über 700°C hitzebeständige Isolierung angebracht. Der so isolierte Innenleiter 15 ist in einen als geschlossenes Rohr ausgeführten Außenleiter 18 eingeschlossen, der dicht auf dem Glasseidegeflecht 17 aufliegt und mit seinen Wellentälern vorzugsweise in dasselbe eindringt. Der Außenleiter 18 besteht in bevorzugter Ausführungsform ebenfalls aus Kupfer. Er kann aber auch aus anderen Metallen mit ausreichend hohem Schmelzpunkt bestehen, beispielsweise aus Stahl. Auch die Isolierung der Leitung 5 kann grundsätzlich aus anderem Material bestehen, solange dasselbe ausreichend temperaturbeständig ist.

Der Außenleiter 18 kann als glattes Rohr ausgeführt sein. Vorzugsweise wird er aber quer zu seiner Längsrichtung gewellt. Er wird dadurch stabil gegen Querbelastungen, aber auch flexibler. Ein gewellter Außenleiter stellt also einen wirksameren Schutz der Leitung dar und ermöglicht außerdem eine verbesserte Verarbeitbarkeit derselben. Wegen seiner besseren Flexibilität kann ein gewellter Außenleiter 18 auch mehrmals die Einwirkung hoher Temperaturen unbeschadet überstehen. Er ist auch dann immer noch eine feuchtigkeitsdichte Umhüllung der Seele der Leitung 5.

Zur Herstellung der hitzebeständigen Leitung 5 nach Fig. 5 wird um den Innenleiter 15 mindestens eine Lage Glimmerband 16 überlappend herumgewickelt. In einer Flechtmaschine wird dann das Geflecht 17 aus Glasseidefäden eng umschließend auf das Glimmerband 16 aufgebracht. Um den so isolierten Innenleiter 15 wird anschließend ein Metallband längseinlaufend zu einem Schlitzrohr geformt und mittels einer Schweißeinrichtung entlang der sich berührenden Kanten mit einer Längsnaht verschweißt. Der dadurch geschlossene Außenleiter 18 kann abschließend gegebenenfalls einer Welleinrichtung zugeführt werden, in welcher er quer zu seiner Längsrichtung gewellt wird. Dabei kann die Wellung so ausgeführt werden, daß die nach innen ragenden Wellentäler des Außenleiters 18 in das Glasseidegeflecht 17 eindringen, ohne dasselbe allerdings zu beschädigen. Die Wellung kann ring- oder schraubenlinienförmig verlaufen. Die flexible Leitung 5 ist damit fertiggestellt.

Die Wirkungsweise der Vorrichtung ist folgende :

Solange die Materialstärke der Kufe 1 größer als die Mindestwandstärke L ist, spricht der Sensor 4 nicht an. Infolge seines speziellen Aufbaus ist er so temperaturbeständig, daß er alle Bremsvorgänge mit entsprechend hohen Temperaturen aushält. Wenn die Kufe 1 soweit abgetragen ist, daß nur noch die Mindestwandstärke L übrig ist, dann wird bei einem weiteren Bremsvorgang der Sensor 4 mit in denselben einbezogen. Es wird dabei zunächst der Außenleiter 18 der Leitung 5 abgetragen, wodurch eine Kapazitätsänderung der Leitung 5 eintritt. Diese Kapazitätsänderung kann im Gerät 6 bereits ausgewertet und schon zu diesem Zeitpunkt zu einem Auswechseln der Kufe 1 benutzt werden. Ein Auswechseln der Kufe ist auf jeden Fall dann erforderlich, wenn der Abtrag derselben so weit fortgeschritten ist, daß auch die Isolierung der Leitung 5 und deren Innenleiter 15 durchtrennt werden. Sowohl der dabei auftretende Kurzschluß als auch die vollständige Unterbrechung des Innenleiters 15 führen zu einer auswertbaren Fehleranzeige im Gerät 6.

## Patentansprüche

1. Vorrichtung zur Überwachung eines einem Verschleiß unterworfenen Bauteils (1), bei welcher in einer Ausnehmung (3) des Bauteils ein Sensor (4) angebracht ist, dessen in die Ausnehmung (3) hineinragende Länge (2) einer vorgegebenen Mindestwandstärke des Bauteils (1) entspricht und der mindestens eine hitzebeständige elektrische Leitung (5) aufweist, die in Form einer im Sensor (4) liegenden Schleife geführt ist und deren aus dem Sensor herausragende Enden mit elektrischen Kontakten für ihre Leiter (15, 18) verbunden sind, <u>dadurch gekennzeichnet,</u>
— daß die Leitung (5) als koaxiale Leitung ausgebildet ist, die aus einem Innenleiter (15), einer denselben umgebenden, hitzebeständigen Isolierung (16, 17) und einem über der Isolierung liegenden, als geschlossenes Rohr ausgeführten Außenleiter (18) besteht und
— daß die Leitung (5) im Sensor (4) etwa halbkreisförmig gebogen so in demselben angeordnet ist, daß ihr Außenleiter (18) etwa in Höhe der in der Ausnehmung (3) des Bauteils (1) befindlichen Endfläche (9) des Sensors (4) liegt.

2. Vorrichtung nach Anspruch 1, <u>dadurch gekennzeichnet,</u> daß der Außenleiter (18) der Leitung (5) als quergewelltes Rohr ausgeführt ist.

3. Vorrichtung nach Anspruch 1 oder 2, <u>dadurch gekennzeichnet,</u> daß in dem Sensor (4) ein zylindrischer Stützkörper (10) angebracht ist, um den die Leitung (5) unter Anlage an demselben herumgebogen ist.

4. Vorrichtung nach einem der Ansprüche 1 bis 3, <u>dadurch gekennzeichnet,</u> daß der Sensor (4) ein mechanisch stabiles und temperaturbeständiges Gehäuse (7) aufweist, dessen Hohlräume durch eine temperaturbeständige Vergußmasse (12), vorzugsweise auf keramischer Basis, ausgefüllt sind.

5. Vorrichtung nach einem der Ansprüche 1 bis 4, <u>dadurch gekennzeichnet,</u> daß die aus dem Sensor (4) herausragenden Enden der Leitung (5) nebeneinander liegend feuchtigkeitsdicht in ein die elektrischen Kontakte enthaltendes Kupplungsteil (14) eingebettet sind.

6. Vorrichtung nach einem der Ansprüche 1 bis 5, <u>dadurch gekennzeichnet,</u> daß die Leitung (5) in einen aus Kunststoff bestehenden Schutzmantel (13) eingebettet ist, der bis in die Vergußmasse (12) und bis in das Kupplungsteil (14) ragt.

7. Vorrichtung nach einem der Ansprüche 1 bis 6, <u>dadurch gekennzeichnet,</u> daß in dem Sensor (4) zwei in Schleifenform gebogene Leitungen (5) nebeneinander angebracht sind.

8. Vorrichtung nach einem der Ansprüche 1 bis 7, dadurch gekennzeichnet, daß der Innenleiter (15) der Leitung (5) aus vernickeltem Kupfer besteht, daß die Isolierung aus mindestens einer Schicht aus Glimmerband (16) und einem darüber liegenden Glasseidegeflecht (17) aufgebaut ist und daß der Außenleiter (18) aus einem längseinlaufenden und mittels einer Längsnaht verschweißten Band zu einem Rohr geformt und anschließend vorzugsweise quer zu seiner Längsachse gewellt ist.

## Claims

1. A sensing apparatus for monitoring a structure subject (1) to wear, comprising a sensing device (4) insertable into a recess (3) in one surface of said structure, said sensing device having at least a portion of its length (L) that corresponds to a predetermined minimum thickness between said one surface and an opposite surface of said structure, and at least a heat resistant electrical line (5), lying within the said sensing device (4) in form of a loop and electrical contact means being connected to the ends of the line (5) projecting out of the sensing device (4) for contacting the conductors (15, 18) of the line, wherein
— the line (5) is a coaxial line comprising an inner conductor (15), a heat resistant insulation (16, 17) positioned about said inner conductor, and an outer conductor (18) in form of a metallic tubular sheath positioned about said heat resistant insulation, and wherein
— the line (5) within the sensing device (4) is bend nearly in a semicircular form in such a way, that the outer conductor (18) is adjacent to the end face (9) of the sensing device (4), positioned within the recess (3) of the structure subject (1).

2. Apparatus in accordance with claim 1, wherein the outer conductor (18) of the line (5) is corrugated.

3. Apparatus in accordance with claim 1 or 2, wherein the sensing device (4) includes a cylindrical support element (10) around which the line (5) is positioned.

4. Apparatus in accordance with one of the claims 1 to 3, wherein said sensing device (4) includes a mechanically stable, temperature resistant housing (7) whose hollow spaces are filled with temperature resistant filler material (12), preferably on the base of ceramics.

5. Apparatus in accordance with one of the claims 1 to 4, wherein the ends of the line (5) projecting out of the sensing device (4) are embedded into a fluid-tight plug member (14) surroundig the said electrical contact means.

6. Apparatus in accordance with one of the claims 1 to 5, wherein a fluid-tight protective jacket (13) is formed around the line (5), which extends into said filler material (12) at one end and into the plug member (14) at the other end.

7. Apparatus in accordance with one of the claims 1 to 6, wherein two electrical lines (5) are positioned in the sensing device (4), side-by-side and in form of loops.

8. Apparatus in accordance with one of the claims 1 to 7, wherein said inner conductor (15) is comprised of nickel-plated copper, said heat resistant insulation is comprised of at least one layer of a band of mica (16) surrounded by a glass fiber mesh (17), and the outer conductor (18) being formed from a longitudinal moved band into a tube, whose longitudinal abutting edges are welded, the closed tube finally is corrugated preferably at a right angle to its longitudinal axis.

## Revendications

1. Dispositif pour la surveillance d'une pièce (1) sujette à usure, dans lequel un capteur (4) est disposé dans une cavité (3) de la pièce, la longueur (L) du capteur pénétrant dans la cavité correspondant à une épaisseur minimale donnée de la pièce, le capteur comprenant au moins une ligne électrique (5) résistant à la chaleur, disposée dans le capteur sous forme d'une boucle dont les extrémités qui sortent du capteur sont reliées par ses conducteurs (15, 18) à des contacts électriques, caractérisé en ce que
la ligne (5) est une ligne coaxiale qui comprend un conducteur intérieur (15), une isolation (16, 17) résistant à la chaleur et entourant le conducteur intérieur, et, autour de l'isolation, un conducteur extérieur (18) réalisé en tube fermé,
la ligne (5) dans le capteur (4) étant courbée en demi-cercle de telle sorte que son conducteur extérieur atteigne sensiblement le fond (9) de la cavité du capteur.

2. Dispositif selon la revendication 1, caractérisé en ce que le conducteur extérieur (18) de la ligne (5) est un tube à ondulations transversales.

3. Dispositif selon la revendication 1 ou 2, caractérisé en ce qu'un corps d'appui cylindrique (10), autour duquel la ligne (5) est enroulée, est placé dans le capteur (4).

4. Dispositif selon l'une des revendications 1 à 3, caractérisé en ce que le capteur (4) comprend un boîtier (7) mécaniquement robuste et résistant à la chaleur, dont l'intérieur est rempli d'une masse de remplissage (12), avantageusement à base de céramique.

5. Dispositif selon l'une des revendications 1 à 4, caractérisé en ce que que les extrémités de ligne (5) sortant du capteur côte-à-côte sont encastrées de manière étanche à l'humidité dans un organe de couplage (14) contenant les contacts électriques.

6. Dispositif selon l'une des revendications 1 à 5, caractérisé en ce que la ligne (5) est noyée dans une gaine de protection (13) en matériau synthétique qui s'étend jusqu'à la masse de remplissage (12) et jusqu'à l'intérieur de l'organe de couplage (14).

7. Dispositif selon l'une des revendications 1 à 6, caractérisé en ce que deux lignes (15) pliées en boucle sont disposées côte-à-côte dans le capteur (4).

8. Dispositif selon l'une des revendications 1 à 7, caractérisé en ce que le conducteur intérieur (15) de la ligne (5) est constitué de cuivre nickelé, que l'isolement comprend au moins une couche d'une bande micacée (16) recouverte d'une tresse de soie de verre (17), et que le conducteur extérieur est constitué d'un tube formé par une bande enroulée longitudinalement et soudée le long de l'arête et comportant avantageusement des ondulations transversales.

# Fig.1

# Fig.2

# Fig.3

# Fig.4

# Fig.5